# EUROPÄISCHE PATENTSCHRIFT

(11) **EP 3 689 571 B1**
(45) Veröffentlichungstag und Bekanntmachung des Hinweises auf die Patenterteilung: **05.04.2023**
(21) Anmeldenummer: 19154288.5
(22) Anmeldetag: 29.01.2019
(51) Int. Cl.: B29B 9/06, B29C 48/00, B29C 48/05, B01J 2/22, B02C 18/14, B02C 18/22, B29C 48/06, B02C 18/18

(54) **STRANGGRANULATOR, UND VERFAHREN ZUM EINSTELLEN DES SCHNEIDSPALTS EINES DERARTIGEN GRANULATORS**
STRAND GRANULATOR, AND METHOD FOR ADJUSTING THE CUTTING GAP OF SUCH A GRANULATOR
GRANULATEUR À JONCS, ET PROCÉDÉ DE RÉGLAGE DU JEU DE COUPE D'UN TEL GRANULATEUR

(43) Veröffentlichungstag der Anmeldung: 05.08.2020
(73) Patentinhaber: Coperion GmbH, 70469 Stuttgart (DE)
(72) Erfinder: Matuschek, Martin, 65183 Wiesbaden (DE); Wygas, Stefan, 65929 Frankfurt (DE)
(74) Vertreter: Rau, Schneck & Hübner Patentanwälte Rechtsanwälte PartGmbB

(56) Entgegenhaltungen:
- EP-A2- 0 243 732
- EP-B1- 2 296 857
- CN-U- 204 622 144
- DE-A1- 3 620 015
- DE-A1- 10 103 827
- DE-C1- 4 411 165
- JP-A- 2001 062 829

## Beschreibung

Die Erfindung betrifft einen Stranggranulator mit Schneidspalteinstellung zum Granulieren eines Materialstrangs. Ferner betrifft die Erfindung ein Verfahren zum Einstellen des Schneidspalts eines derartigen Stranggranulators.

Aus der EP 2 296 857 B1 ist ein Stranggranulator zum Granulieren eines Materialstrangs bekannt. Der Stranggranulator umfasst einen drehbaren Schneidrotor mit mehreren Schneiden und eine Gegenschneide, die zusammen einen Schneidspalt ausbilden. Die Gegenschneide ist zur Einstellung des Schneidspalts relativ zu dem Schneidrotor verlagerbar. Das Verlagern der Gegenschneide erfolgt mittels einer Einstellschraube.

Aus der EP 0 243 732 A2, der DE 101 03 827 A1, der DE 36 20 015 A1, der DE 44 11 165 C1, der JP 2001-62829 A und der CN 204 622 144 U sind Stranggranulatoren bekannt.

Der Erfindung liegt die Aufgabe zugrunde, einen einfach aufgebauten Stranggranulator zu schaffen, der eine einfache und exakte Einstellung des Schneidspalts ermöglicht.

Diese Aufgabe wird durch einen Stranggranulator mit den Merkmalen des Anspruchs 1 gelöst. Dadurch, dass der Grundkörper relativ zu dem Auflagekörper ausschließlich linear verlagerbar und/oder ausschließlich um mindestens eine Schwenkachse verschwenkbar ist, ist ein Abstand der Gegenschneide zu der mindestens einen Schneide und/oder ein Winkel der Gegenschneide relativ zu der mindestens einen Schneide unabhängig voneinander einstellbar. Somit ist eine Einstellung des Winkels der Gegenschneide relativ zu der mindestens einen Schneide möglich, ohne dass der Abstand zu der mindestens einen Schneide nachteilig beeinflusst wird. Entsprechend ist eine Einstellung des Abstands der Gegenschneide relativ zu der mindestens einen Schneide möglich, ohne dass der Winkel der Gegenschneide relativ zu der mindestens einen Schneide negativ beeinflusst wird. Durch das im Wesentlichen unabhängige lineare Verlagern und Verschwenken des Grundkörpers, ist eine einfache, schnelle und exakte Einstellung des Schneidspalts möglich. Der Stranggranulator dient insbesondere zum Granulieren eines Kunststoffstrangs.

Der Stranggranulator gewährleistet eine einfache und exakte Einstellung des Schneidspalts. Die erste Einstellschraube ist mittels eines Gewindes, insbesondere eines Feingewindes, in eine Gewindebohrung des ersten Stifts eingeschraubt. Entsprechend ist die zweite Einstellschraube mittels eines Gewindes, insbesondere eines Feingewindes, in eine Gewindebohrung des zweiten Stifts eingeschraubt. Eine erste Mittellängsachse der ersten Einstellschraube verläuft im Wesentlichen senkrecht zu der ersten Schwenkachse. Eine zweite Mittellängsachse der zweiten Einstellschraube verläuft im Wesentlichen senkrecht zu der zweiten Schwenkachse. Die Stifte bzw. die Schwenkachsen sind entlang der Gegenschneide zueinander beabstandet angeordnet. Durch gleichartiges Betätigen bzw. Verdrehen der Einstellschrauben werden die Stifte synchron linear verlagert, sodass die Gegenschneide parallel verlagert wird und ein Abstand zwischen der Gegenschneide und der mindestens einen Schneide einstellbar ist. Wird demgegenüber nur eine Einstellschraube betätigt bzw. verdreht, so wird der Grundkörper bzw. die Gegenschneide um die Schwenkachse des beabstandeten Stifts verschwenkt, sodass ein Winkel zwischen der Gegenschneide und der mindestens einen Schneide einstellbar ist.

Die jeweilige Einstellschraube ist mittels eines Gewindes, insbesondere mittels eines Feingewindes, in eine Gewindebohrung des zugehörigen Stifts eingeschraubt. Eine Mittellängsachse der Einstellschraube verläuft quer, insbesondere senkrecht zu einer Stift-Achse bzw. einer durch den Stift gebildeten Schwenkachse. Der Stift ist an dem Grundkörper gelagert, sodass durch ein Drehen der Einstellschraube der Stift entlang der Mittellängsachse linear verlagerbar ist. Die Verlagerungsrichtung ist abhängig von der Drehrichtung der Einstellschraube. Der Stranggranulator weist die erste Einstellschraube und die zweite Einstellschraube auf. Die erste Einstellschraube ist mit dem ersten Stift verbunden, wohingegen die zweite Einstellschraube mit dem zweiten Stift verbunden ist. Die Stifte sind entlang der Gegenschneide beabstandet zueinander angeordnet. Der erste Stift bildet die erste Schwenkachse aus, wohingegen der zweite Stift die zweite Schwenkachse ausbildet. Durch gleichartiges Betätigen der Einstellschrauben werden die Stifte synchron zueinander linear verlagert, sodass die Gegenschneide parallel linear verlagert wird und ein Abstand zwischen der Gegenschneide und der mindestens einen Schneide einstellbar ist. Wird lediglich die erste Einstellschraube betätigt, so wird der erste Stift linear verlagert und der Grundkörper um die zweite Schwenkachse verschwenkt. Entsprechend wird der Grundkörper um die erste Schwenkachse verschwenkt, wenn lediglich die zweite Einstellschraube betätigt und der zweite Stift linear verlagert wird. Durch das Betätigen bzw. Verdrehen von nur einer Einstellschraube ist der Winkel zwischen der Gegenschneide und der mindestens einen Schneide einstellbar.

Die mindestens eine Schneide ist vorzugsweise an einem Schneidrotor ausgebildet, der um eine Drehachse drehbar ist. Der Schneidrotor umfasst insbesondere mehrere Schneidzähne, die eine jeweilige Schneide ausbilden.

Der Schneidrotor ist insbesondere an einem Gehäuse des Stranggranulators drehbar gelagert. Der Schneidrotor ist mittels eines Antriebs um die Drehachse drehantreibbar.

Die Gegenschneide ist vorzugsweise an einer Schneidleiste ausgebildet. Die Schneidleiste ist insbesondere an einem Schneidleistenhalter befestigt. Vorzugsweise ist die Schneidleiste auswechselbar mit dem Schneidleistenhalter verbunden. Der Grundkörper umfasst insbesondere den Schneidleistenhalter und die daran angeordnete Schneidleiste.

Der Auflagekörper bildet eine Auflageebene aus, auf der der Grundkörper linear verlagerbar und/oder verschwenkbar ist. Der Auflagekörper ist vorzugsweise an einem Gehäuse des Stranggranulators befestigt. Die Drehachse des Schneidrotors verläuft insbesondere im Wesentlichen parallel zu der Auflageebene. Der Grundkörper ist auf der Auflageebene insbesondere derart linear verlagerbar, dass die Gegenschneide zu ihrer Ausgangsposition parallel verlagert wird und so der Abstand zu der mindestens einen Schneide eingestellt wird. Darüber hinaus ist der Grundkörper auf der Auflageebene insbesondere derart um eine quer, vorzugsweise senkrecht, zu der Auflageebene verlaufende Schwenkachse verschwenkbar, dass der Winkel zwischen der mindestens einen Schneide und der Gegenschneide eingestellt wird.

Ein Stranggranulator nach Anspruch 2 gewährleistet eine einfache und exakte Einstellung des Schneidspalts. Dadurch, dass die jeweilige Schwenkachse im Wesentlichen senkrecht zu der Auflageebene verläuft, ist der Grundkörper und somit die Gegenschneide zu der mindestens einen Schneide einfach und exakt im Winkel einstellbar. Der Grundkörper ist relativ zu dem Auflagekörper um die erste Schwenkachse und um die zweite Schwenkachse verschwenkbar. Die Schwenkachsen verlaufen vorzugsweise parallel zueinander. Die Schwenkachsen sind entlang der Gegenschneide zueinander beabstandet. Vorzugsweise ist die erste Schwenkachse im Bereich eines ersten Endes und die zweite Schwenkachse im Bereich eines zweiten Endes des Grundkörpers ausgebildet.

Der Stranggranulator nach Anspruch 3 gewährleistet einen einfachen Aufbau und eine einfache und exakte Einstellung des Schneidspalts. Der jeweilige Stift ist in einer zugehörigen Ausnehmung des Grundkörpers angeordnet. Die Ausnehmung ist beispielsweise als Sacklochbohrung ausgebildet. Der Stift bildet mit der Ausnehmung eine Passung derart aus, dass der Stift relativ zu dem Grundkörper verschwenkbar ist und die Schwenkachse ausgebildet wird, jedoch ein selbsttätiges Verlagern entlang der Schwenkachse vermieden wird.

Ein Stranggranulator nach Anspruch 4 oder 5 gewährleistet eine einfache und exakte Einstellung des Schneidspalts. Die mindestens eine Einstellschraube umfasst vorzugsweise ein Feingewinde. Das Feingewinde hat insbesondere eine Einstellgenauigkeit von mindestens 0,002 mm/Grad, insbesondere von mindestens 0,0015 mm/Grad und insbesondere von mindestens 0,001 mm/Grad. Beispielsweise hat das Feingewinde eine Einstellgenauigkeit von 0,00139 mm/Grad. Der Stranggranulator umfasst die erste Einstellschraube und die zweite Einstellschraube. Vorzugsweise ist die erste Einstellschraube im Bereich eines ersten Endes und die zweite Einstellschraube im Bereich eines zweiten Endes des Grundkörpers angeordnet. Die Einstellschrauben sind insbesondere entlang der Gegenschneide beabstandet zueinander angeordnet. Eine jeweilige Mittellängsachse der jeweiligen Einstellschraube verläuft im Wesentlichen parallel zu einer Auflageebene des Auflagekörpers. Vorzugsweise verläuft eine jeweilige Mittellängsachse der jeweiligen Einstellschraube quer, insbesondere im Wesentlichen senkrecht, zu der zugehörigen Schwenkachse und/oder zu der Gegenschneide. Durch gleichartiges Betätigen der Einstellschrauben ist der Grundkörper und somit die Gegenschneide parallel linear verlagerbar, so dass ein Abstand zu der mindestens einen Schneide einstellbar ist. Durch das Betätigen nur einer der Einstellschrauben ist der Grundkörper und somit die Gegenschneide um eine Schwenkachse verschwenkbar, sodass ein Winkel zwischen der mindestens einen Schneide und der Gegenschneide einstellbar ist.

Ein Stranggranulator nach Anspruch 6 gewährleistet eine einfache und exakte Einstellung des Schneidspalts. Dadurch, dass die jeweilige Einstellschraube und der jeweils zugehörige Stift mittels eines zugehörigen Federelements vorgespannt sind, wird einerseits ein Flankenspiel der Gewindeverbindung zwischen der jeweiligen Einstellschraube und dem zugehörigen Stift eliminiert und andererseits eine Selbsthemmung der Gewindeverbindung erzielt. Das jeweilige Federelement ist insbesondere als Schraubenfeder ausgebildet.

Ein Stranggranulator nach Anspruch 7 gewährleistet eine einfache und exakte Einstellung des Schneidspalts. Dadurch, dass die jeweilige Einstellschraube verschwenkbar zu dem Auflagekörper gelagert ist, passt sich die Einstellschraube mit ihrer zugehörigen Mittellängsachse selbsttätig an eine Winkelstellung der Gegenschneide an. Hierdurch werden unerwünschte Verspannungen und/oder Zwangskräfte, die die Genauigkeit der Einstellung des Schneidspalts beeinträchtigen würden, vermieden. Die jeweilige Mittellängsachse der Einstellschraube ist somit verschwenkbar, insbesondere im Wesentlichen parallel zu der Auflageebene.

Ein Stranggranulator nach Anspruch 8 gewährleistet eine einfache und exakte Einstellung des Schneidspalts. Die jeweilige Buchse ist an dem Auflagekörper befestigt. In der jeweiligen Buchse ist eine Einstellschraube derart gelagert, dass eine Mittellängsachse der Einstellschraube verschwenkbar ist. Hierzu bildet die Einstellschraube mit der Buchse ein definiertes Radialspiel aus. Die mindestens eine Einstellschraube bildet mit der zugehörigen Buchse somit eine Spielpassung aus. Für ein Verhältnis eines Außendurchmessers d der mindestens einen Einstellschraube zu einem Innendurchmesser D der zugehörigen Buchse gilt insbesondere: 0,94 ≤ d/D ≤ 1,0, insbesondere 0,95 ≤ d/D ≤ 0,99, und insbesondere 0,96 ≤ d/D ≤ 0,98.

Ein Stranggranulator nach Anspruch 9 gewährleistet einen einfachen Aufbau und eine einfache und exakte Einstellung des Schneidspalts. Dadurch, dass das jeweilige Federelement zwischen dem zugehörigen Stift und der zugehörigen Buchse wirkt, wird einerseits die mit einem Radialspiel in der Buchse gelagerte Einstellschraube in Richtung der Buchse gezogen, sodass die Einstellschraube gegen die Buchse anliegt, und andererseits ein Flankenspiel der Gewindeverbindung zwischen dem Stift und der darin eingeschraubten Einstellschraube eliminiert. Darüber hinaus wird eine Selbsthemmung der Gewindeverbindung bzw. der Einstellschraube erzielt. Durch das Radialspiel ist die jeweilige Einstellschraube bzw. die jeweilige Mittellängsachse der Einstellschraube verschwenkbar in der zugehörigen Buchse gelagert, sodass sich die jeweilige Einstellschraube mit ihrer Mittellängsachse selbsttätig an eine Winkelstellung der Gegenschneide anpasst.

Ein Stranggranulator nach Anspruch 10 gewährleistet eine einfache und exakte Einstellung des Schneidspalts. Die mindestens eine Fixiereinheit dient zum Fixieren des Grundkörpers und des Auflagekörpers zueinander, wenn sich der Grundkörper in einer Position befindet, in der die Gegenschneide in gewünschter Weise zu der mindestens einen Schneide eingestellt ist. Vorzugsweise weist der Stranggranulator mehrere Fixiereinheiten auf, die den Grundkörper entlang der Gegenschneide zu dem Auflagekörper fixieren. Die mindestens eine Fixiereinheit ist derart ausgebildet, dass eine Anpresskraft erzeugbar ist, die den Grundkörper gegen eine Auflageebene des Auflagekörpers presst. Vorzugsweise weist die mindestens eine Fixiereinheit eine jeweilige Fixierschraube und eine zugehörige Fixiermutter auf. Die jeweilige Fixiermutter ist in einer zugehörigen Nut angeordnet und entlang dieser verlagerbar. Die jeweilige Nut ist in dem Auflagekörper ausgebildet. Die jeweilige Nut wird an einer der Fixierschraube zugewandten Seite durch Anschläge begrenzt, gegen die die Fixiermutter in einem fixierten Zustand mittels der Fixierschraube gezogen und angepresst wird. Die jeweilige Nut verläuft insbesondere parallel zu der Auflageebene und/oder im Wesentlichen parallel zu einer Mittellängsachse mindestens einer Einstellschraube. Die mindestens eine Fixiereinheit erzeugt im Wesentlichen ausschließlich eine auf den Grundkörper wirkende Anpresskraft, die senkrecht zu der Auflageebene gerichtet ist. Hierdurch wird die Einstellung der Gegenschneide nicht beeinträchtigt.

Der Erfindung liegt ferner die Aufgabe zugrunde, ein Verfahren zum einfachen und exakten Einstellen des Schneidspalts zu schaffen.

Diese Aufgabe wird durch ein Verfahren mit den Merkmalen des Anspruchs 11 gelöst.

Weitere Merkmale, Vorteile und Einzelheiten der Erfindung ergeben sich aus der nachfolgenden Beschreibung eines Ausführungsbeispiels. Es zeigen:
- Fig. 1: eine schematische Seitenansicht eines Stranggranulators zum Granulieren eines Materialstrangs in einem durch einen Schneidrotor und einer Gegenschneide gebildeten Schneidspalt,

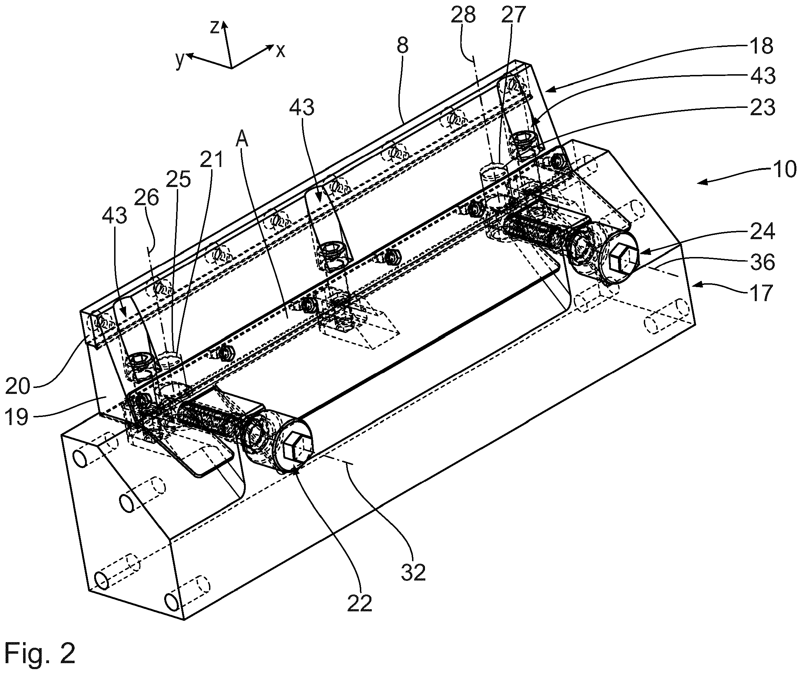

- Fig. 2: eine perspektivische Ansicht einer Einstelleinrichtung zur Einstellung der Gegenschneide und des zugehörigen Schneidspalts,

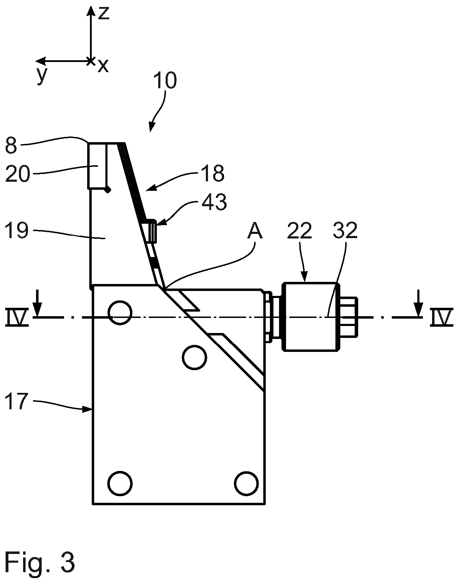

- Fig. 3: eine erste Seitenansicht der Einstelleinrichtung,

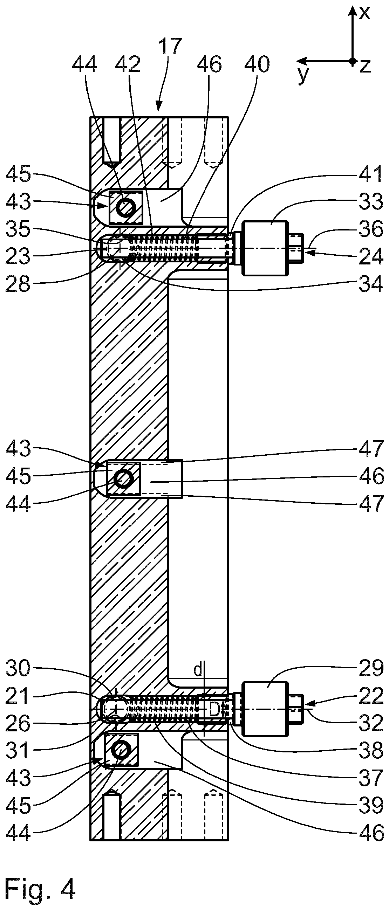

- Fig. 4: einen ersten Schnitt durch die Einstelleinrichtung entlang der Schnittlinie IV-IV in Figur 3,

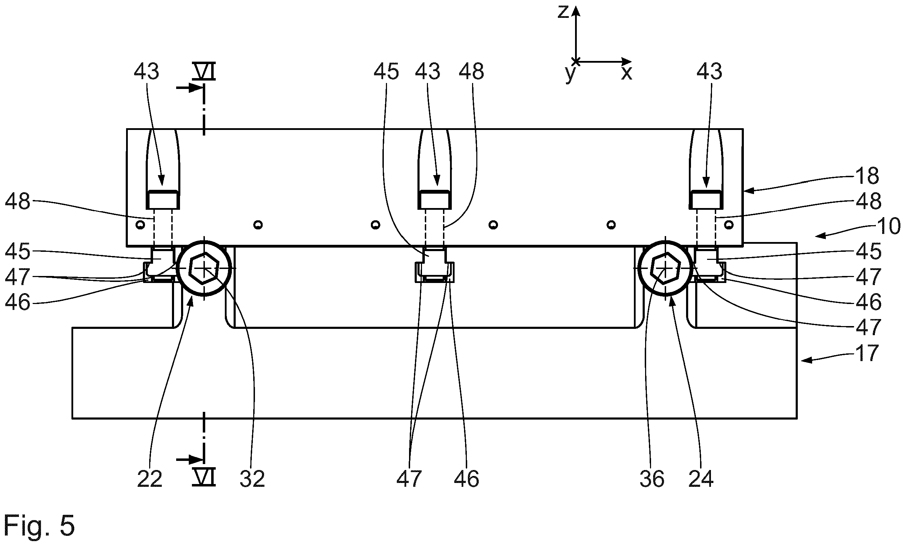

- Fig. 5: eine zweite Seitenansicht der Einstelleinrichtung,

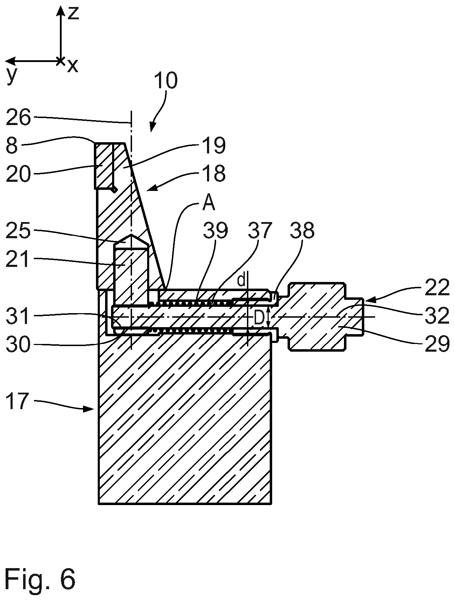

- Fig. 6: einen zweiten Schnitt durch die Einstelleinrichtung entlang der Schnittlinie VI-VI in Figur 5, und
- Fig. 7: eine Draufsicht auf die Einstelleinrichtung.

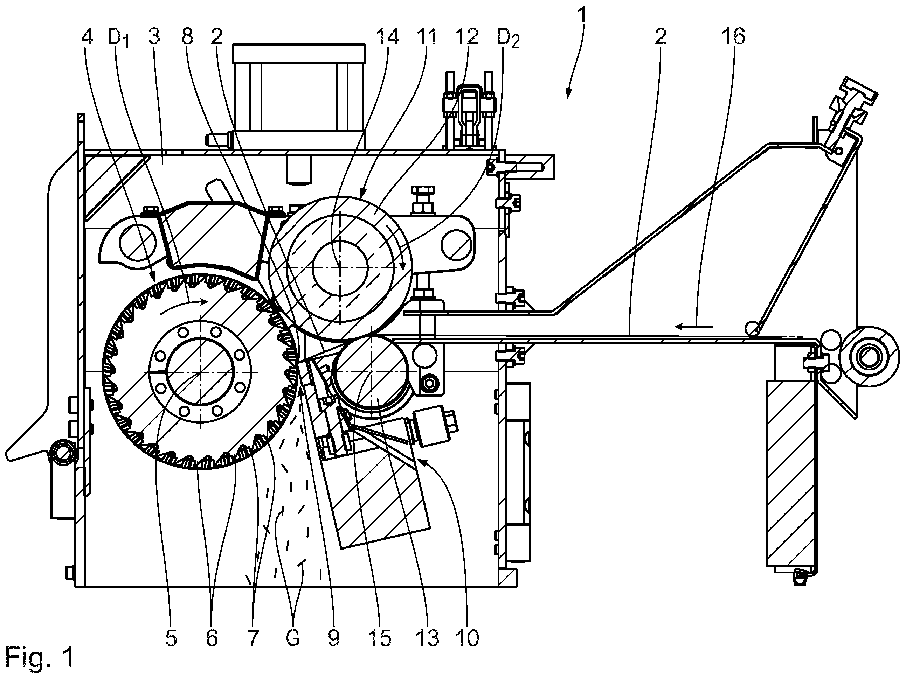

Der in Figur 1 dargestellte Stranggranulator 1 dient zum Granulieren von einem Materialstrang 2. Der Materialstrang 2 ist beispielsweise ein Kunststoffstrang. Der Stranggranulator 1 umfasst ein Gehäuse 3, an dem ein Schneidrotor 4 um eine Drehachse 5 drehbar gelagert ist. Der Schneidrotor 4 ist zylinderförmig ausgebildet und weist umfangsseitig mehrere Schneidzähne 6 auf. Die Schneidzähne 6 bilden endseitig eine jeweilige Schneide 7 aus. Der Schneidrotor 4 ist mittels eines nicht näher dargestellten Antriebs in einer Drehrichtung D₁ um die Drehachse 5 drehantreibbar.

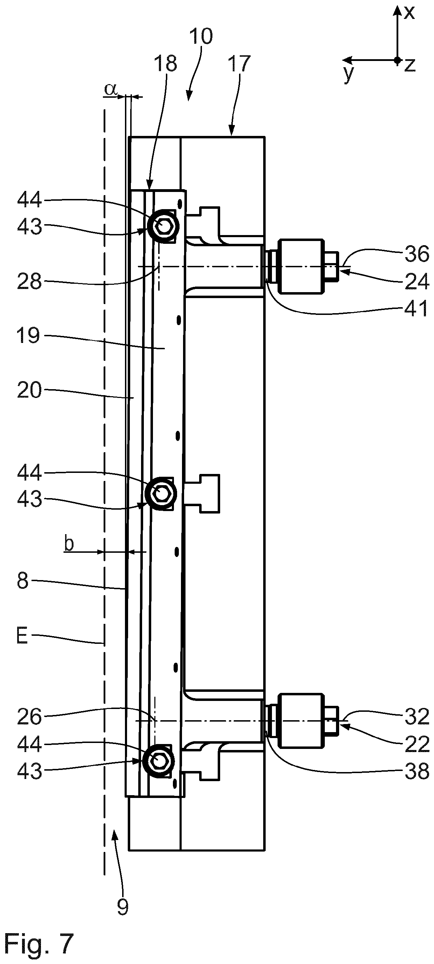

Die Schneiden 7 und eine Gegenschneide 8 begrenzen zwischen sich einen Schneidspalt 9. Die Gegenschneide 8 ist mittels einer Einstelleinrichtung 10 relativ zu den Schneiden 7 verlagerbar. Die Schneiden 7 definieren eine Schneidebene E. Die Schneidebene E verläuft parallel zu eine x- und einer z-Richtung und senkrecht zu einer y-Richtung. Die x-, die y- und die z-Richtung verlaufen jeweils senkrecht zueinander und bilden ein kartesisches Koordinatensystem. Zum Einstellen des Schneidspalts 9 ist die Gegenschneide 8 relativ zu der Schneidebene E linear verlagerbar und/oder verschwenkbar. Die Schneidebene E, die Gegenschneide 8 und der Schneidspalt 9 sind in Figur 7 veranschaulicht. Der Schneidspalt 9 ist in Figur 7 zum Zwecke der Veranschaulichung überdimensioniert dargestellt.

Der Stranggranulator 1 umfasst eine Zuführeinrichtung 11 zum Zuführen des Materialstrangs 2 in den Schneidspalt 9. Die Zuführeinrichtung 11 umfasst zwei Förderrollen 12, 13, die um zugehörige Drehachsen 14, 15 drehbar an dem Gehäuse 3 gelagert sind. Die Förderrolle 12 ist mittels eines nicht näher dargestellten Antriebs um die Drehachse 14 in einer Drehrichtung Drehrichtung D₂ drehantreibbar, sodass der Materialstrang 2 in einer Förderrichtung 16 dem Schneidspalt 9 zuführbar ist.

Die Einstelleinrichtung 10 umfasst einen Auflagekörper 17, der an dem Gehäuse 3 befestigt ist. Der Auflagekörper 17 bildet eine Auflageebene A aus. Auf der Auflageebene A ist ein Grundkörper 18 angeordnet. Der Grundkörper 18 umfasst einen Schneidleistenhalter 19 und eine daran auswechselbar befestigte Schneidleiste 20. Die Schneidleiste 20 bildet die Gegenschneide 8 aus, sodass die Gegenschneide 8 an dem Grundkörper 18 angeordnet ist.

Die Einstelleinrichtung 10 umfasst einen ersten Stift 21 und eine zugehörige erste Einstellschraube 22 sowie einen zweiten Stift 23 und eine zugehörige zweite Einstellschraube 24. Der erste Stift 21 ist in einer ersten Ausnehmung 25 des Grundkörpers 18 bzw. des Schneidleistenhalters 19 verschwenkbar gelagert, sodass der erste Stift 21 eine erste Schwenkachse 26 ausbildet. Entsprechend ist der zweite Stift 23 in einer zweiten Ausnehmung 27 des Grundkörpers 18 bzw. des Schneidleistenhalters 19 schwenkbar gelagert, sodass der zweite Stift 23 eine zweite Schwenkachse 28 ausbildet. Die Schwenkachsen 26, 28 sind in der x-Richtung, also entlang der Gegenschneide 8, beabstandet zueinander angeordnet. Die Schwenkachsen 26, 28 verlaufen im Wesentlichen senkrecht zu der Auflageebene A und parallel zu der Schneidebene E bzw. der z-Richtung.

Die erste Einstellschraube 22 umfasst einen Schraubenkopf 29 und ein Feingewinde 30. Das Feingewinde 30 ist in eine Gewindebohrung 31 des ersten Stifts 21 eingeschraubt. Eine Mittellängsachse 32 der ersten Einstellschraube 22 verläuft im Wesentlichen senkrecht zu der ersten Schwenkachse 26. Entsprechend umfasst die zweite Einstellschraube 24 einen Schraubenkopf 33 und ein Feingewinde 34. Das Feingewinde 34 ist in eine Gewindebohrung 35 des zweiten Stifts 23 eingeschraubt. Eine zweite Mittellängsachse 36 der zweiten Einstellschraube 24 verläuft im Wesentlichen senkrecht zu der zweiten Schenkachse 28.

Die erste Einstellschraube 22 ist im Bereich des Feingewindes 30 in einer ersten Aufnahmebohrung 37 des Auflagekörpers 17 angeordnet und mittels einer ersten Buchse 38 an dem Auflagekörper 17 gelagert. Die erste Aufnahmebohrung 37 verläuft im Wesentlichen parallel zu der Auflageebene A und ist im Bereich des ersten Stifts 21 in Richtung der Auflageebene A offen. Die erste Buchse 38 ist mittels einer Schraubverbindung in der ersten Aufnahmebohrung 37 verschraubt. In der ersten Aufnahmebohrung 37 ist ein erstes Federelement 39 angeordnet, das zwischen dem ersten Stift 21 und der ersten Buchse 38 vorgespannt ist. Das erste Federelement 39 ist als Schraubenfeder ausgebildet, durch die die erste Einstellschraube 22 geführt ist. Der Schraubenkopf 29 liegt gegen die erste Buchse 38 an.

Die zweite Einstellschraube 24 ist im Bereich des Feingewindes 34 in einer zweiten Aufnahmebohrung 40 des Auflagekörpers 17 angeordnet und mittels einer zweiten Buchse 41 an dem Auflagekörper 17 gelagert. Die zweite Aufnahmebohrung 40 verläuft im Wesentlichen parallel zu der Auflageebene A und ist im Bereich des zweiten Stifts 23 in Richtung der Auflageebene A offen. Die zweite Buchse 41 ist mittels einer Schraubverbindung in der zweiten Aufnahmebohrung 40 verschraubt. In der zweiten Aufnahmebohrung 40 ist ein zweites Federelement 42 angeordnet, das zwischen dem zweiten Stift 23 und der zweiten Buchse 41 vorgespannt ist. Das zweite Federelement 42 ist als Schraubenfeder ausgebildet, durch die die zweite Einstellschraube 24 geführt ist. Der Schraubenkopf 33 liegt gegen die zweite Buchse 41 an.

Zur Ausbildung einer Spielpassung bzw. eines Radialspiels zwischen den Einstellschrauben 22, 24 und der jeweils zugehörigen Buchse 38, 41 weisen die Einstellschrauben 22, 24 einen Außendurchmesser d und die Buchsen 38, 41 einen Innendurchmesser D auf, wobei gilt: 0,94 ≤ d/D ≤ 1,0, insbesondere 0,95 ≤ d/D ≤ 0,99, und insbesondere 0,96 ≤ d/D ≤ 0,98. Die jeweilige Spielpassung ermöglicht ein Verschwenken der jeweiligen Einstellschraube 22, 24 bzw. der zugehörigen Mittellängsachsen 32, 36 im Wesentlichen parallel zu der Auflageebene A.

Der jeweilige Schraubenkopf 29, 33 ist zum manuellen Einstellen der Einstellschrauben 22, 24 gerändelt. Zusätzlich weist der jeweilige Schraubenkopf 29, 33 eine Werkzeugaufnahme zum Zusammenwirken mit einem Werkzeug auf. Die Buchsen 38, 41 sind als Bundbuchsen ausgebildet. Die Buchsen 38, 41 können eine Sinter- oder Kunststoffbeschichtung aufweisen und/oder eine zusätzliche Anlaufscheibe haben, sodass die Reibung mit der jeweils zugehörigen Einstellschraube 22, 24 minimiert ist.

Die Einstellschrauben 22, 24 sind gleichartig und synchron betätigbar bzw. verdrehbar, sodass der Grundkörper 18 und somit die Gegenschneide 8 ausschließlich linear verlagerbar sind. Die lineare Verlagerung erfolgt in Richtung der Mittellängsachsen 32, 36 und vorzugsweise in der y-Richtung. Durch ein Betätigen bzw. Verdrehen entweder der ersten Einstellschraube 22 oder der zweiten Einstellschraube 24 ist der Grundkörper 18 und somit die Gegenschneide 8 relativ zu dem Auflagekörper 17 ausschließlich verschwenkbar. Beim Betätigen der ersten Einstellschraube 22 ist der Grundkörper 18 um die zweite Schwenkachse 28 verschwenkbar, wohingegen beim Betätigen der zweiten Einstellschraube 24 der Grundkörper 18 um die erste Schwenkachse 26 verschwenkbar ist.

Zum Fixieren des Grundkörpers 18 auf der Auflageebene A des Auflagekörpers 17 umfasst der Stranggranulator 1 mehrere Fixiereinheiten 43. Die Fixiereinheiten 43 sind in der x-Richtung beabstandet zueinander angeordnet. Die Fixiereinheiten 43 umfassen jeweils eine Fixierschraube 44 und eine zugehörige Fixiermutter 45. Für jede der Fixiereinheiten 43 ist in dem Auflagekörper 17 eine Nut 46 ausgebildet, die parallel zu der y-Richtung und zu der Auflageebene A verläuft. Die jeweilige Nut 46 ist in Richtung des Grundkörpers 18 bereichsweise offen, sodass der Auflagekörper 17 im Bereich der jeweiligen Nut 46 Anschläge 47 für die zugehörige Fixierschraube 44 ausbildet. Die jeweilige Fixiermutter 45 wird auch als Nutstein bezeichnet.

Zur Aufnahme der Fixierschrauben 44 sind in dem Grundkörper 18 bzw. dem Schneidleistenhalter 19 jeweilige Bohrungen 48 ausgebildet. Durch Anziehen der Fixierschrauben 44 erzeugen die Fixiereinheiten 43 eine Anpresskraft, die den Grundkörper 18 gegen den Auflagekörper 17 presst und so fixiert.

Die Funktionsweise der Stranggranulator 1 und der Einstelleinrichtung 10 ist nachfolgend beschrieben:
Zum Betrieb des Stranggranulators 1 muss der Schneidspalt 9 eingestellt werden, sodass aus dem Materialstrang 2 in gewünschter Weise Granulat G erzeugt wird. Hierzu muss die Gegenschneide 8 relativ zu der Schneidebene E, die durch die Schneiden 7 definiert ist, positioniert und eingestellt werden. Figur 7 veranschaulicht eine nicht eingestellte Gegenschneide 8, die zu der Schneidebene E einen Abstand b und einen Winkel α hat. Zum Einstellen der Gegenschneide 8 werden die Fixiereinheiten 43 gelöst. Hierzu werden die Fixierschrauben 44 gelöst, sodass der Grundkörper 18 nicht länger gegen den Auflagekörper 17 gepresst wird.

Anschließend wird der Winkel α eingestellt. Um den Winkel α zu minimieren, muss der Grundkörper 18 um die erste Schwenkachse 26 verschwenkt werden. Hierzu wird die zweite Einstellschraube 24 derart verdreht, dass der zugehörige zweite Stift 23 entlang der zweiten Mittellängsachse 36 in Richtung der Schneidebene E verlagert wird. Beim Verschwenken des Grundkörpers 18 um die erste Schwenkachse 26 bleibt die Position der ersten Schwenkachse 26 und somit der Abstand der ersten Schwenkachse 26 zu der Schneidebene E unverändert. Das Verschwenken des Grundkörpers 18 erfolgt somit im Wesentlichen unabhängig von einer linearen Verlagerung des Grundkörpers 18. Das Verschwenken wird beendet, wenn die Gegenschneide 8 entlang ihrer Länge im Wesentlichen einen gleichen Abstand b von der Schneidebene E hat. Soweit hierzu die Einstellschraube 24 asymmetrisch zu der Einstellschraube 22 eingestellt werden muss, passen sich die Mittellängsachsen 32, 36 aufgrund der Spielpassung zwischen den Einstellschrauben 22, 24 und den zugehörigen Buchsen 38, 41 selbsttätig an die Winkelstellung des Grundkörpers 18 an. Hierdurch werden Verspannungen und Zwangskräfte, die die Einstellgenauigkeit beeinträchtigen könnten, vermieden.

Zum Einstellen des Abstandes b werden die Einstellschrauben 22, 24 anschließend gleichartig bzw. synchron verdreht, sodass der Grundkörper 18 und somit die Gegenschneide 8 parallel zur Ausgangsposition linear verlagert werden. Durch das gemeinsame Verdrehen der Einstellschrauben 22, 24 ändert sich der Winkel α bzw. die eingestellte Winkelstellung der Gegenschneide 8 nicht. Die Gegenschneide 8 wird somit ausschließlich linear in Richtung der Mittellängsachsen 32, 36 verlagert. Das lineare Verlagern erfolgt somit unabhängig von einem Verschwenken des Grundkörpers 18. Hierdurch wird der Abstand b auf ein gewünschtes Maß eingestellt.

Die Einstelleinrichtung 10 ermöglicht somit aufgrund ihrer Konstruktion ein Verschwenken und/oder ein lineares Verlagern der Gegenschneide 8 unabhängig voneinander. Hierdurch ist eine einfache und exakte Einstellung des Schneidspalts 9 erzielbar. Durch das Verschwenken um die erste Schwenkachse 26 oder um die zweite Schwenkachse 28 ist der Schneidspalt 9 zudem an den Enden des Grundkörpers 18 unabhängig voneinander einstellbar. Die Fixiereinheiten 43 werden zusammen mit dem Grundkörper 18 verlagert, sodass die Fixiereinheiten 43 in jeder Position des Grundkörpers 18 eine Anpresskraft erzeugen, die im Wesentlichen senkrecht zu der Auflageebene A gerichtet ist.

Ist die Gegenschneide 8 bzw. der Schneidspalt 9 eingestellt, so werden die Fixiereinheiten 43 fixiert. Durch die Vorspannung der Federelemente 39, 42 werden das Flankenspiel der Gewindeverbindung zwischen den Einstellschrauben 22, 24 und den Stiften 21, 23 eliminiert und eine ungewollte Veränderung des Schneidspalts 9 beim Festziehen der Fixierschrauben 44 verhindert. Anschließend kann mit dem Granulieren des Materialstrangs 2 begonnen werden. Hierzu wird mittels der Zuführeinrichtung 11 der Materialstrang 2 in der Förderrichtung 16 zu der Gegenschneide 8 und in den Schneidspalt 9 geführt und dort mittels der mit der Gegenschneide 8 zusammenwirkenden Schneiden 7 zu Granulat G zerteilt.

## Patentansprüche

1. Stranggranulator zum Granulieren eines Materialstrangs mit
- mindestens einer Schneide (7),
- einer Gegenschneide (8), wobei
-- die Gegenschneide (8) an einem Grundkörper (18) angeordnet ist und
-- der Grundkörper (18) zur Einstellung der Gegenschneide (8) relativ zu einem Auflagekörper (17) linear verlagerbar ist,
- einer Zuführeinrichtung (11) zum Zuführen eines Materialstrangs (2) in einen Schneidspalt (9) zwischen der mindestens einen Schneide (7) und der Gegenschneide (8),
**gekennzeichnet**
**durch** eine erste Einstellschraube (22) und einen ersten Stift (21), der eine erste Schwenkachse (26) ausbildet und mittels der ersten Einstellschraube (22) verlagerbar ist, und
**durch** eine zweite Einstellschraube (24) und einen zweiten Stift (23), der eine zweite Schwenkachse (28) ausbildet und mittels der zweiten Einstellschraube (24) verlagerbar ist,
wobei die erste Einstellschraube (22) an dem Auflagekörper (17) angeordnet und mit dem an dem Grundkörper (18) gelagerten ersten Stift (21) verbunden ist, so dass der Grundkörper (18) relativ zu dem Auflagekörper (17) um die zweite Schwenkachse (28) verschwenkbar ist, und
wobei die zweite Einstellschraube (24) an dem Auflagekörper (17) angeordnet und mit dem an dem Grundkörper (18) gelagerten zweiten Stift (23) verbunden ist, sodass der Grundkörper (18) relativ zu dem Auflagekörper (17) um die erste Schwenkachse (26) verschwenkbar ist.

2. Stranggranulator nach Anspruch 1, **dadurch gekennzeichnet dass** die jeweilige Schwenkachse (26, 28) senkrecht zu einer Auflageebene (A) des Auflagekörpers (17) verläuft.

3. Stranggranulator nach Anspruch 1 oder 2, **dadurch gekennzeichnet, dass** die jeweilige Schwenkachse (26, 28) mittels des jeweiligen Stifts (21, 23) ausgebildet ist, an dem der Grundkörper (18) schwenkbar gelagert ist.

4. Stranggranulator nach mindestens einem der vorangegangenen Ansprüche, **dadurch gekennzeichnet,**
**dass** der Grundkörper (18) mittels der ersten Einstellschraube (22) oder mittels der zweiten Einstellschraube (24) auf einer Auflageebene (A) des Auflagekörpers (17) verschwenkbar ist.

5. Stranggranulator nach mindestens einem der vorangegangenen Ansprüche, **dadurch gekennzeichnet,**
**dass** der Grundkörper (18) mittels der ersten Einstellschraube (22) und der zweiten Einstellschraube (24) auf einer Auflageebene (A) des Auflagekörpers (17) linear verlagerbar ist.

6. Stranggranulator nach mindestens einem der Ansprüche 1 bis 5,
**dadurch gekennzeichnet**
**dass** die jeweilige Einstellschraube (22, 24) und der jeweilige Stift (21, 23) mittels eines jeweiligen Federelements (39, 42) zueinander vorgespannt sind.

7. Stranggranulator nach mindestens einem der Ansprüche 1 bis 6,
**dadurch gekennzeichnet,**
**dass** die jeweilige Einstellschraube (22, 24) relativ zu dem Auflagekörper (17) verschwenkbar gelagert ist.

8. Stranggranulator nach mindestens einem der Ansprüche 1 bis 7,
**dadurch gekennzeichnet,**
**dass** die jeweilige Einstellschraube (22, 24) in einer jeweiligen an dem Auflagekörper (17) angeordneten Buchse (38, 41) gelagert ist.

9. Stranggranulator nach mindestens einem der Ansprüche 6 bis 8,
**dadurch gekennzeichnet,**
**dass** das jeweilige Federelement (39, 42) zwischen dem jeweiligen Stift (21, 23) und einer jeweiligen an dem Auflagekörper (17) befestigten Buchse (38, 41) angeordnet ist.

10. Stranggranulator nach mindestens einem der vorangegangenen Ansprüche, **gekennzeichnet**
**durch** mindestens eine Fixiereinheit (43) zum Fixieren des Grundkörpers (18) und des Auflagekörpers (17) zueinander.

11. Verfahren zum Einstellen eines Schneidspalts eines Stranggranulators mit den Schritten:
- Bereitstellen eines Stranggranulators (1) nach einem der Ansprüche 1 bis 10,
- lineares Verlagern des Grundkörpers (18) relativ zu dem Auflagekörper (17) und/oder Verschwenken des Grundkörpers (18) relativ zu dem Auflagekörper (17) um mindestens eine Schwenkachse (26, 28) zum Einstellen des Schneidspalts (9).

## Claims

1. A strand pelletizer for pelletizing a strand of material with
- at least one cutting edge (7),
- an opposite cutting edge (8), wherein
-- the opposite cutting edge (8) is arranged on a base body (18) and
-- the base body (18) is linearly displaceable relative to a support body (17) for adjusting the opposite cutting edge (8),
- a feeding device (11) for feeding a material strand (2) into a cutting gap (9) between the at least one cutting edge (7) and the opposite cutting edge (8),
**characterized**
**by** a first adjustment screw (22) and a first pin (21) which forms a first pivot axis (26) and is displaceable by means of the first adjustment screw (22), and
**by** a second adjustment screw (24) and a second pin (23) which forms a second pivot axis (28) and is displaceable by means of the second adjustment screw (24),
wherein the first adjustment screw (22) is arranged at the support body (17) and is connected to the first pin (21) which is mounted on the base body (18) so that the base body (18) is pivotable relative to the support body (17) about the second pivot axis (28), and
wherein the second adjustment screw (24) is arranged at the support body (17) and is connected to the second pin (23) which is mounted on the base body (18) so that the base body (18) is pivotable relative to the support body (17) about the first pivot axis (26).

2. A strand pelletizer according to claim 1, **characterized in that** the respective pivot axis (26, 28) runs perpendicular to a support plane (A) of the support body (17).

3. A strand pelletizer according to claim 1 or 2, **characterized in that** the respective pivot axis (26, 28) is formed by means of the respective pin (21, 23) on which the base body (18) is pivotably mounted.

4. A strand pelletizer according to at least one of the preceding claims,
**characterized**
**in that** the base body (18) is pivotable on a support plane (A) of the support body (17) by means of the first adjustment screw (22) or by means of the second adjustment screw (24).

5. A strand pelletizer according to at least one of the preceding claims,
**characterized**
**in that** the base body (18) is linearly displaceable on a support plane (A) of the support body (17) by means of the first adjustment screw (22) and the second adjustment screw (24).

6. A strand pelletizer according to at least one of claims 1 to 5, **characterized**
**in that** the respective adjustment screw (22, 24) and the respective pin (21, 23) are pretensioned relative to one another by means of a respective spring element (39, 42).

7. A strand pelletizer according to at least one of claims 1 to 6, **characterized**
**in that** the respective adjustment screw (22, 24) is pivotably mounted relative to the support body (17).

8. A strand pelletizer according to at least one of claims 1 to 7, **characterized**
**in that** the respective adjustment screw (22, 24) is mounted in a respective bushing (38, 41) arranged on the support body (17).

9. A strand pelletizer according to at least one of claims 6 to 8, **characterized**
**in that** the respective spring element (39, 42) is arranged between the respective pin (21, 23) and a respective bushing (38, 41) fastened to the support body (17).

10. A strand pelletizer according to at least one of the preceding claims, **characterized**
**by** at least one fixing unit (43) for fixing the base body (18) and the support body (17) to each other.

11. A method for adjusting a cutting gap of a strand pelletizer comprising the steps of:
- providing a strand pelletizer (1) according to any one of claims 1 to 10,
- linearly displacing the base body (18) relative to the support body (17) and/or pivoting of the base body (18) relative to the support body (17) about at least one pivot axis (26, 28) for adjusting the cutting gap (9).

## Revendications

1. Granulateur à boudins pour la granulation d'un boudin de matière avec
- au moins une lame (7),
- une contre-lame (8), dans lequel
-- la contre-lame (8) est disposée sur un corps de base (18) et
-- le corps de base (18) peut être déplacé linéairement par rapport à un corps d'appui (17) pour le réglage de la contre-lame (8),
- un dispositif d'alimentation (11) pour alimenter un boudin de matière (2) dans une fente de coupe (9) entre l'au moins une lame (7) et la contre-lame (8),
**caractérisé**
**par** une première vis de réglage (22) et une première tige (21) qui forme un premier axe de pivotement (26) et qui peut être déplacée au moyen de la première vis de réglage (22), et
**par** une deuxième vis de réglage (24) et une deuxième tige (23) qui forme un deuxième axe de pivotement (28) et qui peut être déplacée au moyen de la deuxième vis de réglage (24),
dans lequel la première vis de réglage (22) est disposée sur le corps d'appui (17) et reliée à la première tige (21) montée sur le corps de base (18), de sorte que le corps de base (18) peut pivoter par rapport au corps d'appui (17) autour du deuxième axe de pivotement (28), et dans lequel la deuxième vis de réglage (24) est disposée sur le corps d'appui (17) et reliée à la deuxième tige (23) montée sur le corps de base (18), de sorte que le corps de base (18) peut pivoter par rapport au corps d'appui (17) autour du premier axe de pivotement (26).

2. Granulateur à boudins selon la revendication 1, **caractérisé en ce que** l'axe de pivotement respectif (26, 28) s'étend perpendiculairement à un plan d'appui (A) du corps d'appui (17).

3. Granulateur à boudins selon la revendication 1 ou 2, **caractérisé en ce que** l'axe de pivotement respectif (26, 28) est réalisé au moyen de la tige respective (21, 23) sur laquelle le corps de base (18) est monté de manière à pouvoir pivoter.

4. Granulateur à boudins selon au moins l'une des revendications précédentes, **caractérisé**
**en ce que** le corps de base (18) peut être pivoté sur un plan d'appui (A) du corps d'appui (17) au moyen de la première vis de réglage (22) ou au moyen de la deuxième vis de réglage (24).

5. Granulateur à boudins selon au moins l'une des revendications précédentes, **caractérisé**
**en ce que** le corps de base (18) peut être déplacé linéairement sur un plan d'appui (A) du corps d'appui (17) au moyen de la première vis de réglage (22) et de la deuxième vis de réglage (24).

6. Granulateur à boudins selon au moins l'une des revendications 1 à 5,
**caractérisé**
**en ce que** la vis de réglage respective (22, 24) et la tige respective (21, 23) sont précontraintes l'une par rapport à l'autre au moyen d'un élément de ressort respectif (39, 42).

7. Granulateur à boudins selon au moins l'une des revendications 1 à 6,
**caractérisé**
**en ce que** la vis de réglage respective (22, 24) est montée de manière à pouvoir pivoter par rapport au corps d'appui (17).

8. Granulateur à boudins selon au moins l'une des revendications 1 à 7,
**caractérisé**
**en ce que** la vis de réglage respective (22, 24) est logée dans une douille respective (38, 41) disposée sur le corps d'appui (17).

9. Granulateur à boudins selon au moins l'une des revendications 6 à 8,
**caractérisé**
**en ce que** l'élément de ressort respectif (39, 42) est disposé entre la tige respective (21, 23) et une douille respective (38, 41) fixée au corps d'appui (17).

10. Granulateur à boudins selon au moins une des revendications précédentes, **caractérisé**
**par** au moins une unité de fixation (43) pour fixer le corps de base (18) et le corps d'appui (17) l'un par rapport à l'autre.

11. Procédé de réglage d'une fente de coupe d'un granulateur à boudins, comprenant les étapes suivantes :
- mise à disposition d'un granulateur à boudins (1) selon l'une quelconque des revendications 1 à 10,
- déplacement linéaire du corps de base (18) par rapport au corps d'appui (17) et/ou pivotement du corps de base (18) par rapport au corps d'appui (17) autour d'au moins un axe de pivotement (26, 28) pour le réglage de la fente de coupe (9).
